# EUROPEAN PATENT APPLICATION

(11) **EP 3 932 205 A1**
(43) Date of publication of application: **05.01.2022**
(21) Application number: 21183371.0
(22) Date of filing: 02.07.2021
(51) Int. Cl.: A01N 37/02, A01N 57/20, A01P 13/00

(54) **HERBICIDAL COMPOSITIONS AND RELATED METHODS**

(30) Priority: 03.07.2020 US 202062705548 P
(71) Applicant: Belchim Crop Protection USA, LLC, Wilmington, North Carolina 19808 (US)
(72) Inventor: CORBETT, Jerry L., Selma (US); WOOD, Thomas C., Wilmington (US)
(74) Representative: HGF

(57) **Abstract**

A herbicidal composition is provided that includes at least one glutamine synthetase inhibitor and at least one herbicidal fatty acid or carboxylic acid compound. Methods of burndown treatment of undesirable vegetation are also provided.

## Description

### CROSS-REFERENCE TO RELATED APPLICATIONS

The present application claims priority to U.S. provisional application serial number 62/705,548 filed July 3, 2020.

### BACKGROUND OF THE DISCLOSURE

Glyphosate has been used as an industry standard for consumers and lawn care professionals for many years due to glyphosate's non-selective post emergence foliar application that has no soil residual. Glyphosate has been widely used to control unwanted established weeds in landscapes, driveways, barnyards, right-a-ways, fence rows, however, lawsuits have raised concerns about end-user health safety. Herbicide manufactures and growers alike are seeking glyphosate alternatives. Thus, there exists a need for glyphosate alternatives that exhibit similar or improved burndown performance.

### SUMMARY OF THE DISCLOSURE

An herbicidal composition is provided that includes at least one glutamine synthetase inhibitor and at least one herbicidal fatty acid or carboxylic acid compound of formula (I)

CH₃-(CH₂)ₙ-C=O(OH) formula (I)

wherein n is an integer between 6 and 8. According to one embodiment, the at least one glutamine synthetase inhibitor is glufosinate. According to one embodiment, the at least one herbicidal fatty acid or carboxylic acid compound of formula (I) is pelargonic acid. According to one embodiment, the herbicidal composition further includes at least one additional herbicide. According to one embodiment, the additional herbicide is an acetolactate synthase (ALS) inhibitor. According to one embodiment, the acetolactate synthase (ALS) inhibitor is imazethapyr. According to one embodiment, the herbicidal composition further includes one or more additional components such as insecticides, fungicides, safeners, antioxidants, chemical stabilizers, adhesives, fertilizers, perfumes, humectants and dyestuffs. According to one embodiment, the at least one glutamine synthetase inhibitor is glufosinate and the at least one herbicidal fatty acid or carboxylic acid compound of formula (I) is pelargonic acid. According to one embodiment, the herbicidal composition further includes imazethapyr. According to one embodiment, the herbicidal composition is formulated as a ready-to-use (RTU) formulation, emulsifiable concentrate (EC), microemulsifiable concentrate, oil dispersion (OD), powder, water dispersible granule (WG), or water soluble granule (SG).

According to one aspect, a method for burndown treatment of undesirable vegetation is provided. The method includes the step of applying an herbicidal composition as provided herein onto or around: a locus where desirable will be planted or emerge; or a locus where undesirable vegetation is present or is expected to be present. According to one embodiment, the undesirable vegetation is tolerant or resistant to one or more herbicides.

According to another aspect, a method of controlling growth of undesirable vegetation is provided. The method includes the step of applying the herbicidal composition as provided herein onto or around: a locus where desirable vegetation will be planted or emerge; or a locus where undesirable vegetation is present or is expected to be present. According to one embodiment, the undesirable vegetation is tolerant or resistant to one or more herbicides.

According to one aspect, a kit is provided. The kits includes at least one herbicidal composition as provided herein and, optionally, instructions for use. According to one embodiment, the at least one glutamine synthetase inhibitor and at least one herbicidal fatty acid or carboxylic acid compound are combined in an herbicidal composition contained within the kit. According to one embodiment, the herbicidal composition further includes one or more additional components such as other herbicides, insecticides, fungicides, safeners, antioxidants, chemical stabilizers, adhesives, fertilizers, perfumes, humectants and dyestuffs. According to one embodiment, the at least one glutamine synthetase inhibitor is glufosinate. According to one embodiment, the at least one herbicidal fatty acid or carboxylic acid compound of formula (I) is pelargonic acid.

According to one aspect, a tank mix herbicidal composition is provided. The tank mix includes at least one herbicidal composition as provided herein and water, spray oil, or a combination of water and spray oil.

According to another aspect, an herbicidal composition is provided that includes about 10% v/v to about 20% v/v of at least one fatty acid or carboxylic acid compound, about 5.0% v/v to about 15% v/v of at least one glutamine synthetase inhibitor, and about 1% v/v to about 5% v/v of at least one acetolactate synthase (ALS) inhibitor. According to one embodiment, the at least one glutamine synthetase inhibitor is glufosinate. According to one embodiment, the at least one herbicidal fatty acid or carboxylic acid compound of formula (I) is pelargonic acid. According to one embodiment, the acetolactate synthase (ALS) inhibitor is imazethapyr. According to one embodiment, the composition is formulated as a ready-to-use (RTU) formulation, emulsifiable concentrate (EC), microemulsifiable concentrate, oil dispersion (OD), powder, water dispersible granule (WG), or water soluble granule (SG). According to one embodiment, the herbicidal composition is formulated as a ready-to-use (RTU) formulation that includes about 0.75% v/v of at least one fatty acid or carboxylic acid compound per gallon of formulation, about 0.5% of at least one glutamine synthetase inhibitor per gallon of formulation, and about 0.15% v/v of at least one acetolactate synthase (ALS) inhibitor per gallon of formulation. According to one embodiment, the herbicidal composition is formulated for direct contact on or around undesirable vegetation foliage and roots.

According to one embodiment there is an herbicidal composition comprising:
at least one glutamine synthetase inhibitor; and
at least one herbicidal fatty acid or carboxylic acid compound of formula (I)

   CH₃-(CH₂)ₙ-C=O(OH) formula (I)

   wherein n is an integer between 6 and 8.

The herbicidal composition may comprise at least one glutamine synthetase inhibitor is glufosinate.

The herbicidal composition may comprise at least one herbicidal fatty acid or carboxylic acid compound of formula (I) is pelargonic acid.

The herbicidal composition may further comprise at least one additional herbicide.

The additional herbicide may be an acetolactate synthase (ALS) inhibitor.

The acetolactate synthase (ALS) inhibitor may be an imazethapyr.

The herbicidal composition may further comprise one or more additional components selected from the group consisting of insecticides, fungicides, safeners, antioxidants, chemical stabilizers, adhesives, fertilizers, perfumes, humectants and dyestuffs.

The herbicidal composition, wherein the at least one glutamine synthetase inhibitor may be glufosinate and the at least one herbicidal fatty acid or carboxylic acid compound of formula (I) may be pelargonic acid.

The herbicidal composition may further comprise imazethapyr.

The herbicidal composition may be formulated as a ready-to-use (RTU) formulation, emulsifiable concentrate (EC), microemulsifiable concentrate, oil dispersion (OD), powder, water dispersible granule (WG), or water soluble granule (SG).

According to one embodiment there is a method for burndown treatment of undesirable vegetation comprising:
applying the herbicidal composition of claim 1 onto or around:
i) a locus where desirable will be planted or emerge; or
ii) a locus where undesirable vegetation is present or is expected to be present.

The undesirable vegetation may be tolerant or resistant to one or more herbicides.

According to one embodiment there is a method of controlling growth of undesirable vegetation comprising:
applying the herbicidal composition of according to any previous embodiment onto or around:
i) a locus where desirable vegetation will be planted or emerge; or
ii) a locus where undesirable vegetation is present or is expected to be present.

The undesirable vegetation may be tolerant or resistant to one or more herbicides.

According to one embodiment there is a kit comprising:
at least one herbicidal composition of any previous embodiment; and
optionally, instructions for use.

The at least one glutamine synthetase inhibitor and at least one herbicidal fatty acid or carboxylic acid compound may be combined in a herbicidal composition contained within the kit.

The herbicidal composition may further comprise one or more additional components selected from the group consisting of herbicides, insecticides, fungicides, safeners, antioxidants, chemical stabilizers, adhesives, fertilizers, perfumes, humectants and dyestuffs.

Thee at least one glutamine synthetase inhibitor may be glufosinate.

The at least one herbicidal fatty acid or carboxylic acid compound of formula (I) may be pelargonic acid.

According to one embodiment there is a tank mix herbicidal composition comprising:
the herbicidal composition according to any one previous embodiment; and
water, spray oil, or a combination of water and spray oil.

According to one embodiment there is an herbicidal composition comprising:
about 10% v/v to about 20% v/v of at least one fatty acid or carboxylic acid compound;
about 5.0% v/v to about 15% v/v of at least one glutamine synthetase inhibitor; and
about 1% v/v to about 5% v/v of at least one acetolactate synthase (ALS) inhibitor.

The at least one glutamine synthetase inhibitor may be glufosinate.

The at least one herbicidal fatty acid or carboxylic acid compound of formula (I) may be pelargonic acid.

The acetolactate synthase (ALS) inhibitor may be imazethapyr.

The herbicidal composition may be, formulated as a ready-to-use (RTU) formulation, emulsifiable concentrate (EC), microemulsifiable concentrate, oil dispersion (OD), powder, water dispersible granule (WG), or water soluble granule (SG).

The herbicidal composition may be formulated as a ready-to-use (RTU) formulation comprising:
about 0.75% v/v of at least one fatty acid or carboxylic acid compound per gallon of formulation;
about 0.5% of at least one glutamine synthetase inhibitor per gallon of formulation; and
about 0.15% v/v of at least one acetolactate synthase (ALS) inhibitor per gallon of formulation.

The herbicidal composition may be formulated for direct contact on or around undesirable vegetation foliage and roots.

### DETAILED DESCRIPTION

The present disclosure will now be described more fully hereinafter with reference to exemplary embodiments thereof. These exemplary embodiments are described so that this disclosure will be thorough and complete, and will fully convey the scope of the disclosure to those skilled in the art. Indeed, the present disclosure may be embodied in many different forms and should not be construed as limited to the embodiments set forth herein; rather, these embodiments are provided so that this disclosure will satisfy applicable legal requirements. As used in the specification, and in the appended claims, the singular forms "a", "an", "the", include plural referents unless the context clearly dictates otherwise.

As used herein, the terms "controlling" and "combating" are synonyms.

As used herein, the terms "undesirable vegetation" and "weeds" are synonyms. These terms refer to a plant growing (or about to grow or emerge) in competition with a desirable cultivated plant or crop. Examples of undesirable vegetation include, but are not limited to, annual and perennial broadleaf weeds and grasses.

As used herein, the term "desirable vegetation" refers to any member of the plant kingdom that is wanted to be kept alive. Examples include, but are not limited to, crops, trees, shrubs and turf grasses.

As used herein, the term "herbicide" or "herbicidal" refers to one or more chemical compounds that control or otherwise eliminate (e.g., burndown) undesirable vegetation (post emergent) or act as a pre-emergent to prevent growth of undesirable vegetation.

As used herein, the term "synergistic" or "synergistic effect" refers to increased efficacy of herbicidal action of a herbicidal composition compared to the herbicidal action of herbicidal compounds contained therein when administered individually. That is, the herbicidal action of the herbicidal composition exceeds the action of the active compounds when administered alone. The expected activity of a given combination of herbicidal compound can be, but not necessarily, calculated as follows according to a calculation method by Colby (See COLBY, S. R.: "Calculating synergistic and antagonistic responses of herbicide combinations", Weeds 15, pages 20-22, 1967): If X= % damage by herbicide (A) at an application rate of m g/ha, Y=% damage by herbicide (B) at an application rate of n g/ha, E= the expected damage by herbicides (A) and (B) at application rates of m and n kg/ha and, then for a combination: E= X+Y-(Xx Y)/100.

Provided herein are herbicidal compositions containing, among the other components, a combination of herbicidal compounds in effective amounts that result in improved burndown or elimination of unwanted vegetation. The herbicidal compositions provided herein utilize a combination of the herbicidal compounds that show enhanced herbicide action compared to any individual herbicidal compound, alone, when applied to undesirable vegetation. The herbicidal compositions provided herein also result in minimal, if any, damage to any surrounding crop. The herbicidal compositions as provided herein may be applied before emergence or after the emergence of the crop plants or the target undesirable vegetation. The herbicidal compounds provided herein exhibit accelerated action or a synergistic effect on undesirable vegetation and may effect damage more quickly in comparison with solo applications of the herbicidal compounds. The synergistic effect permits a reduction of the application rates of the individual herbicidal compounds, a higher and longer efficacy at the same application rate, the control of undesirable vegetation species which are tolerant or resistant to individual herbicides or to a number of other herbicides, an extension of the period of application and reduction in the number of individual applications required and, as a result for the user, economically and ecologically advantageous control of undesirable vegetation.

According to one embodiment, the herbicidal compositions as provided herein include at least one fatty acid or carboxylic acid herbicide compound. According to one embodiment, the at least one fatty acid or carboxylic acid herbicide compound is pelargonic acid, caprylic acid, capric acid, undecanoic acid, 10-undecenoic acid, lauric acid, myristic acid, palmitic acid, oleic acid, and other suitable mixtures thereof.

According to a particular embodiment, the herbicidal compositions as provided herein include at least one fatty acid or carboxylic acid herbicide compound of formula (I)

CH₃-(CH₂)ₙ-C=O(OH) formula (I)

wherein n is an integer between 6 and 8. According to a particular embodiment, the fatty acid herbicide compound is at least one of the following compounds:

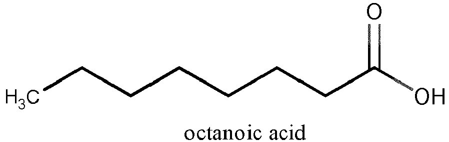

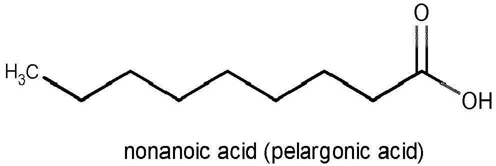

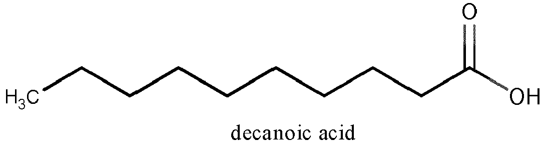

According to one embodiment, the herbicidal compositions as provided herein include pelargonic acid (also known as nonanoic acid). Pelargonic acid is a fast acting fatty acid or carboxylic acid herbicide derived from alkane n-nonane which will provide necrotic efficacy of undesirable vegetation with visual symptoms seen within a few hours to a few days. When applied alone, pelargonic acid may provide fast burn-down of existing weeds and will provide a good level of efficacy depending on application coverage, timing, and stage of growth, however, regrowth of weeds that are not completely controlled may be seen within 7-10 days after application. According to one embodiment, pelargonic acid may be obtained from an oxidative cleavage process of vegetable oils, or a mixture of vegetable oils comprising triglycerides which comprise oleic acid and erucic acid. Pelargonic acid, as provided herein, may be obtained from vegetable oils (e.g., biologically based), animal sources (e.g., tallow based), or a combination of vegetable and animal sources.

According to one embodiment, the herbicidal compositions as provided herein include the at least one fatty acid or carboxylic acid herbicide compound at a concentration of from about 0.01% v/v to about 15.0% v/v. According to another embodiment, the herbicidal compositions as provided herein include the at least one fatty acid or carboxylic acid herbicide compound at a concentration of from about 0.25% v/v to about 7.5% v/v. According to another embodiment, the herbicidal compositions as provided herein include the at least one fatty acid or carboxylic acid herbicide compound at a concentration of from about 0.5% v/v to about 5.0% v/v.

According to one embodiment, the herbicidal compositions as provided herein include at least one glutamine synthetase inhibitor. A glutamine synthetase inhibitor inhibits the activity of glutamine synthetase which converts glutamate and ammonia to glutamine. By inhibiting this activity, ammonia builds up or accumulates resulting in cell death and signs of foliar wilting and yellowing (undesirable vegetation burns itself up).

According to one embodiment, the glutamine synthetase inhibitor as provided herein is glufosinate (DL-4-[hydroxyl(methyl)phosphinoyl]-DL-homoalaninate or phosphinothricin or 2-amino-4-[hydroxy(methyl)phosphoryl]butanoic acid) as illustrated below.

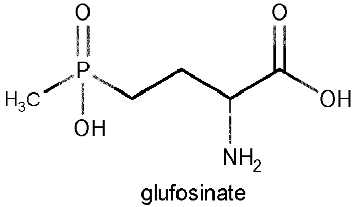

According to one embodiment, the glutamine synthetase inhibitor as provided herein is glufosinate, glufosinate P, or an agriculturally acceptable salt thereof such as glufosinate ammonium or sodium or an enantiomer or tautomer thereof. When applied alone in a post emergent application, glufosinate results in foliar burning within several hours following exposure. Glufosinate can be translocated to the root of weeds depending on species and other environmental conditions. Some perennial and large annual plants may recover or initiate regrowth from auxiliary buds after treatment. When the glutamine synthetase inhibitor is combined with a fatty acid herbicide as provided herein, a synergistic effect is observed and effective, sustained burndown of undesirable vegetation is achieved.

According to one embodiment, the herbicidal compositions as provided herein include at least one glutamine synthetase inhibitor at a concentration of from about 0.01% v/v to about 10.0% v/v. According to one embodiment, the herbicidal compositions as provided herein include at least one glutamine synthetase inhibitor at a concentration of from about 0.05% v/v to about 5.0% v/v. According to one embodiment, the herbicidal compositions as provided herein include at least one glutamine synthetase inhibitor at a concentration of from about 0.1% v/v to about 1.0% v/v.

According to one embodiment, the herbicidal compositions as provided herein exhibit a fatty acid to glutamine synthetase inhibitor weight ratio of 12:1 to about 1:1. According to one embodiment, the herbicidal compositions as provided herein exhibit a fatty acid to glutamine synthetase inhibitor weight ratio of 6:1 to about 1:1. According to one embodiment, the herbicidal compositions as provided herein exhibit a fatty acid to glutamine synthetase inhibitor weight ratio of 4:1 to about 1:1.

According to one embodiment, the herbicidal compositions as provided herein include at least one acetolactate synthase (ALS) inhibitor. Suitable ALS inhibitors include, but are not limited to, imazamox, imazapic, imazapyr, imazaquin, imazethapyr, bispyribac, pyrithiobac, flucarbazone, propoxycarbazone, thiencarbazone, bensulfuron, chlorimuron, chlorsulfuron, halosulfuron, iodosulfuron, mesosulfuron, metsulfuron, nicosulfuron, orthosulfamuron, primisulfuron, prosulfuron, rimsulfuron, sulfosulfuron, thifensulfuron, triasulfuron, tribenuron, trifloxysulfuron, triflusulfuron, cloransulam, florasulam, flumetsulam, penoxsulam, or pyroxsulam. According to one embodiment, the ALS inhibitor is an imidazolinone, pyrimidinylthiobenzoic acid, sulfonylaminocarbonyltriazolinone, sulfonylurea or triazolopyrimidine.

According to one embodiment, the herbicidal compositions provided herein include at least one acetolactate synthase (ALS) inhibitor, at least one glutamine synthetase inhibitor, and at least one herbicidal fatty acid or carboxylic acid compound. According to one embodiment, the herbicidal compositions provided herein include glufosinate, at least one of imidazolinone, pyrimidinylthiobenzoic acid, sulfonylaminocarbonyltriazolinone, sulfonylurea or triazolopyrimidine, and at least one fatty acid or carboxylic acid herbicide compound of formula (I)

CH₃-(CH₂)ₙ-C=O(OH) formula (I)

wherein n is an integer between 6 and 8.

According to one embodiment, the herbicidal compositions provided herein include glufosinate, pelargonic acid, and at least one of imidazolinone, pyrimidinylthiobenzoic acid, sulfonylaminocarbonyltriazolinone, sulfonylurea or triazolopyrimidine.

According to embodiments that include at least one acetolactate synthase (ALS) inhibitor, at least one glutamine synthetase inhibitor, and at least one herbicidal fatty acid or carboxylic acid compound, the at least one glutamine synthetase inhibitor may be present in an amount of from about 0.05% v/v to about 35.0% v/v, or from 1.0% v/v to about 25.0% v/v, or from about 5.0% v/v to about 15.0% v/v, or about 10.0% v/v.

According to embodiments that include at least one acetolactate synthase (ALS) inhibitor, at least one glutamine synthetase inhibitor, and at least one herbicidal fatty acid or carboxylic acid compound, the at least one herbicidal fatty acid or carboxylic acid compound may be present in an amount of from about 0.01% v/v to about 30.0% v/v, or about 5.0% v/v to about 25.0% v/v, or about 10.0% v/v to about 20.0% v/v, or about 15% v/v.

According to embodiments that include at least one acetolactate synthase (ALS) inhibitor, at least one glutamine synthetase inhibitor, and at least one herbicidal fatty acid or carboxylic acid compound, the at least one acetolactate synthase (ALS) inhibitor may be present in an amount of from about 0.01% v/v to about 10.0% v/v, or from 1.0% v/v to about 5.0% v/v, or from about 2.0% v/v to about 4.0% v/v or about 3.0% v/v.

According to one embodiment, the herbicidal compositions as provided herein include at least one acetyl CoA carboxylase such as an aryloxyphenoxypropionate, cyclohexandedione or phenylpyrazolin.

According to one embodiment, the herbicidal compositions as provided herein include at least one plant growth regulator such as an arylpicolinate, benzoic acid, carboxylic acid, phenoxy, or semicarbazone.

According to one embodiment, the herbicidal compositions as provided herein include at least one photosynthesis inhibitor such as a phenylcarbamate, triazine, triazinone, uracil, benzothiadiazole, nitrile, pyridazine, amide or urea.

According to one embodiment, the herbicidal compositions as provided herein include at least one pigment inhibitor such as a phytoene desaturase inhibitor, DOXP synthase inhibitor, or HPPD inhibitor.

According to one embodiment, the herbicidal compositions as provided herein include at least one cell membrane disrupter such as aryl triazinone, diphenylether, N-phenylphthalimide, pyrimidinedione, or bipyridylium.

According to one embodiment, the herbicidal compositions as provided herein include at least one seedling shoot growth inhibitor such as a thiocarbamate, amide, chloroacetamide, oxyacetamide, pyrazole, or benzofurane.

According to one embodiment, the herbicidal compositions as provided herein include at least one nucleic acid inhibitor.

According to one embodiment, the herbicidal composition as provided herein may include one or more additional components selected from the group comprising other pesticides such as herbicides, insecticides, fungicides or other active pesticide ingredients, safeners, antioxidants, chemical stabilizers, adhesives, fertilizers, perfumes, humectants, such as, for example, propylene glycol, and dyestuffs. According to preferred embodiments, the herbicide composition can also comprise various agrochemically active compounds, for example from the group of the acaricides, nematicides, bird repellants, and soil structure improvers.

According to one embodiment, the herbicidal composition further includes at least one surfactant (or dispersant). According to one embodiment, the surfactant allows the herbicidal composition to spread more easily, absorb faster and is not readily washed out by rain. According to one embodiment, the surfactant is a polyethoxylate, nonylphenol, octylphenol, organosilicone. According to another embodiment, the surfactant is an anionic surfactant such as sodium lauryl sulfate, sodium laureth sulfate, ammonium lauryl sulfate, ammonium laureth sulfate, sodium stearate, or potassium cocoate. According to another embodiment, the surfactant is a nonionic surfactant such as cocamide monoethanolamine, cocamide diethanolamine, fatty alcohol ethoxylates, amine oxides, or sulfoxides.

According to one embodiment, the herbicidal composition further includes at least one emulsifier or foam former. Suitable emulsifiers include, but are not limited to, nonionic and anionic emulsifiers, such as polyoxyethylene fatty acid esters, polyoxyethylene fatty alcohol ethers, alkylaryl polyglycol ethers, alkylsulfonates, alkylsulfates, arylsulfonates and protein hydrolyzates.

According to one embodiment, the herbicidal composition includes an extender. According to one embodiment, the extender is water, xylene, toluene, an alkylnaphthalene, chlorobenzenes, chloroethylenes, methylene chloride, cyclohexane, mineral oil fractions, mineral and vegetable oils, alcohols, ethers, esters, ketones such as acetone, methyl ethyl ketone, methyl isobutyl ketone, cyclohexanone, dimethylformamide, dimethyl sulfoxide, or a combination thereof.

According to one embodiment, the herbicidal composition further includes at least one solid carrier. Suitable solid carriers include, but are not limited to, kaolins, clays, talc, chalk, quartz, attapulgite, montmorillonite or diatomaceous earth, and ground synthetic minerals, such as finely divided silica, alumina and silicates.

According to one embodiment, the at least one additional component is at least one flow agent. Suitable flow agents include, but are not limited to, clays such as kaolin, talc, diatomaceous earth and propylene glycol.

The herbicidal compositions as provided herein may also be formulated as a ready-to-use (RTU) formulation, emulsifiable concentrate (EC) formulation, microemulsifiable concentrate, oil dispersion (OD) formulation, powder (e.g., wettable powder (WP)), water dispersible granule (WG), or water soluble granule (SG) formulation. A wettable powder may be dissolved in an appropriate solvent such as water. In other embodiments, the herbicidal compositions as provided herein may be formulated as a tank mix and applied as a water-based spray mixture that may contain various other products including additional herbicides, fertilizers, surfactants, adjuvants, and other components as provided herein. According to a particular embodiment, a tank mix herbicidal composition is provided that includes from typically about 80.0% v/v to about 99.9% v/v of at least one solvent with the remaining tank mix comprising an herbicidal composition as provided herein. According to a particular embodiment, the solvent includes water, spray oil (e.g., phytobland or paraffinic oil), or a combination thereof.

According to another embodiment, the herbicidal compositions as provided herein may be formulated as a separate, stand-alone product (powder or liquid) that is added to a tank mix at the time of use.

According to one embodiment, the herbicidal compositions provided herein may be formulated as a ready-to-use (RTU) formulation and include about 0.75% v/v of at least one fatty acid or carboxylic acid compound per gallon of formulation and about 0.5% of at least one glutamine synthetase inhibitor per gallon of formulation.

According to a particular embodiment, the herbicidal compositions provided herein may be formulated as a ready-to-use (RTU) formulation and include about 0.75% v/v of at least one fatty acid or carboxylic acid compound per gallon of formulation, about 0.5% of at least one glutamine synthetase inhibitor per gallon of formulation, and about 0.15% v/v of at least one acetolactate synthase (ALS) inhibitor per gallon of formulation.

According to one embodiment, the herbicidal composition as provided herein may be applied post-emergence directly to the foliage (e.g., leaves or stems) or roots of undesirable vegetation. If an herbicide composition as provided herein is applied post-emergence to the undesirable vegetation, growth may cease directly after the treatment and begin to die. In this manner, infestation of undesirable vegetation is eliminated very early and in a sustained manner.

According to one embodiment, the herbicidal composition as provided herein may be applied directly to soil surrounding the foliage (e.g., leaves) of a plant to control undesirable vegetation growth. According to one embodiment, the herbicidal compositions as provided herein may be introduced or otherwise applied to a plant previously treated with (e.g., sprayed with) a pesticide. The herbicidal composition as provided herein may also contain other pesticides and other chemicals known to be useful for controlling plant diseases or pests or promoting plant health.

The herbicidal composition may be introduced or applied in a liquid form (e.g., spray mixture) or by mixing the dried form with water to form an aqueous solution and spraying the resulting solution using conventional agricultural sprayers and spraying techniques well known in the art. The herbicidal composition in a liquid form may be diluted with water and applied to undesirable vegetation by spraying (either aerial or ground) or by chemigation. According to one embodiment, the individual herbicidal compounds described herein are sequentially applied, for example by the post-emergence method or early post-emergence applications followed by medium or late post-emergence applications. According to one embodiment, the herbicidal compositions as provided herein are freshly prepared prior to use. According to such an embodiment, the herbicidal compositions are prepared within one to 24 hours prior to use. According to one embodiment, application of the herbicidal compositions provided herein is accomplished in a customary manner, for example by watering, spraying, atomizing, sprinkling, showering, spritzing, spreading in droplets, spattering, dispersing, diffusing or broadcasting.

According to one embodiment, the herbicide composition according can be prepared by known processes, for example, as mixed formulations or emulsifiable concentrate (EC) formulations of the individual components, if appropriate with further active compounds, additives and/or customary formulation auxiliaries, which combinations are then applied in a customary manner diluted with water, or as tank mixes by dilution of components, formulated separately or formulated partially separately, with water. According to one embodiment, the herbicidal compositions as provided herein may be produced by mixing together the herbicidal compounds as provided herein with a solvent or extender followed by agitation and introduction of other components provided herein such as emulsifiers and surfactants.

According to one embodiment, the least one glutamine synthetase inhibitor may be applied to undesirable vegetation at a rate of from about 1.0 g/acre to about 2500 g/acre. According to one embodiment, when present, the at least one acetolactate synthase (ALS) inhibitor may be applied to undesirable vegetation at a rate of from about 1.0 g/acre to about 250 g/acre.

According to one embodiment, the herbicidal compositions as provided herein exhibit increased efficacy compared to each of the herbicidal compounds contained therein when applied individually at the equivalent dose rates. According to one embodiment, the herbicidal compositions as provided herein exhibit increased efficacy of at least 5% compared to each of the herbicidal compounds contained therein when applied individually at the equivalent dose rates. According to one embodiment, the herbicidal compositions as provided herein exhibit increased efficacy of at least 10% compared to each of the herbicidal compounds contained therein when applied individually at the equivalent dose rates. According to one embodiment, the herbicidal compositions as provided herein exhibit increased efficacy of at least 15% compared to each of the herbicidal compounds contained therein when applied individually at the equivalent dose rates. According to one embodiment, the herbicidal compositions as provided herein exhibit increased efficacy of at least 20% compared to each of the herbicidal compounds contained therein when applied individually at the equivalent dose rates. According to one embodiment, the herbicidal compositions as provided herein exhibit increased efficacy of at least 25% compared to each of the herbicidal compounds contained therein when applied individually at the equivalent dose rates. According to one embodiment, the herbicidal compositions as provided herein exhibit increased efficacy of at least 30% compared to each of the herbicidal compounds contained therein when applied individually at the equivalent dose rates. According to one embodiment, the herbicidal compositions as provided herein exhibit increased efficacy of at least 35% compared to each of the herbicidal compounds contained therein when applied individually at the equivalent dose rates. According to one embodiment, the herbicidal compositions as provided herein exhibit increased efficacy of at least 40% compared to each of the herbicidal compounds contained therein when applied individually at the equivalent dose rates. According to one embodiment, the herbicidal compositions as provided herein exhibit increased efficacy of at least 45% compared to each of the herbicidal compounds contained therein when applied individually at the equivalent dose rates. According to one embodiment, the herbicidal compositions as provided herein exhibit increased efficacy of at least 50% compared to each of the herbicidal compounds contained therein when applied individually at the equivalent dose rates. According to one embodiment, the aforementioned efficacy rates are achieved at 2, 4, 8, 13, 23 and 30 days or more after treatment.

The herbicidal compositions as provided herein are useful in controlling undesirable vegetation in any environment such as on or around trees, bushes, or turf grasses. The herbicidal compositions as provided herein are particularly useful in controlling undesirable vegetation associated with turf grass.

The herbicidal compositions as provided herein are useful in controlling undesirable vegetation in and around crops. Suitable crops include, but are not limited to, plants including citrus, such as grapefruit, lemon, lime, orange, tangelo and tangerine; field crops, such as alfalfa, oats, peanuts, potatoes, sugar beets, soybeans, corn, canola, wheat, and barley; small fruits, such as blackberry, cranberry, currant, gooseberry, raspberry and strawberry; tree crops, such as almond, apple, apricot, avocado, banana, cacao, cherry, coffee, filberts, mango, nectarine, olive, peach, pear, pecan, plum, prune and walnut; vegetables, such as beans, broccoli, brussel sprout, cabbage, cantaloupe, carrot, cauliflower, celery, collards, cucumber, eggplant, honeydew, muskmelon, onions, peas, peppers, pumpkin, squash, tomato and watermelon; vines, such as grape, hops and kiwi.

According to one embodiment, a kit is provided. The kit may include one or more spatially separated herbicidal compounds and other components according to the herbicidal compositions provided herein. According to an alternative embodiment, the kit includes at least one herbicidal composition as provided herein that is ready to use and be applied directly to undesirable vegetation. According to an alternative embodiment, the kit includes at least one herbicidal composition as provided herein that is ready to be diluted with a solvent as described herein prior to use. The kits as provided herein may also include a set of instructions for use.

Although specific embodiments of the present invention are herein illustrated and described in detail, the invention is not limited thereto. The above detailed descriptions are provided as exemplary of the present invention and should not be construed as constituting any limitation of the invention. Modifications will be obvious to those skilled in the art, and all modifications that do not depart from the spirit of the invention are intended to be included with the scope of the appended claims.

### EXAMPLE 1

Field studies were conducted on a mixed stand of established Kentucky Tall Fescue containing various established weeds including but not limited to Carolina False Dandelion, Hop Clover, White Clover, Annual Sedge, and Smooth Crabgrass in Selma, NC. The trial location was mowed weekly at a mowing height of three inches. The distribution of weeds was uniform throughout the study.

Individual treatment plots were applied on a 1 x 3 meter squared plot area. The experimental design was a randomized complete block with three replications. The applications were made with a carbon dioxide backpack sprayer equipped with 11003 nozzles with a spray pressure of 40 psi calibrated to deliver approximately 40 gallons per acre spray volume. All applications were applied on a single day. The wind speed was less than 10 mph at time of application.

Data were collected at 2, 4, 8, 13, 23 and 30 days after application of treatments, respectively. Data were collected as an estimate of overall percent weed control (efficacy) of combined weed species taking into consideration necrosis, chlorosis, and stunting of each weed species. The data were analyzed in ARM using the ANOVA and preforming the Duncan's New MRT test at P=0.05 (indicated by "a," "b," "c,", etc.).

Glufosinate used in this trial was Surmise (2.34 lb/gal.) marketed by Albaugh LLC. Pelargonic Acid used in this trial was Beloukha Garden Herbicide (4.21 lb/gal.) marketed by Belchim Crop Protection USA.

At two days after treatment, pelargonic acid alone at 6.4 fluid ounces per gallon (fl oz/gal) provided 40% efficacy of all weeds. The combination of glufosinate and pelargonic acid (1.0 oz/gal + 6.4 fl oz/gal) provided 60% efficacy of all weeds. At four days after treatment, the combination of glufosinate and pelargonic acid (1.0 oz/gal + 6.4 fl oz/gal) had increased to 80% efficacy which was a statistical significant increase compared to each of the products alone at equivalent application rates.

At eight days after treatment, all glufosinate treatments at all dose rates provided good to excellent (85 to 94%) efficacy of all weeds in this trial. Pelargonic alone provided average efficacy at 40% to 73%. All combinations of glufosinate and pelargonic acid, however, provided excellent efficacy of all weeds in this field trial (i.e., the best efficacy).

At 23 days after treatment, weed control from the pelargonic acid treatments had begun to decrease and suggested that the weeds were recovering from the initial effect. Glufosinate alone continued to provide excellent control of all weeds (85 to 99% efficacy). The combination of glufosinate and pelargonic (1.0 oz/gal + 6.4 fl oz/gal) had increased from 91% to 98% control.

The data obtained from this study is summarized in Table 1, below. The total percent weed control was calculated by comparing the individual treated plots and assessing individual weeds.

**TABLE 1**

| Treatment Fluid oz/gal | Percent Control Days After Treatment | | | | | |
|---|---|---|---|---|---|---|
| | 2 | 4 | 8 | 13 | 23 | 30 |
| Untreated/Control | 0.0b | 0.0d | 0.0d | 0.0e | 0.0e | 0.0d |
| Gulfosinate (0.5) | 0.0b | 20.0c | 85.0ab | 90.0b | 85.2b | 83.6b |
| Gulfosinate (1.0) | 0.0b | 15.0cd | 91.0a | 90.7b | 90.4b | 95.0a |
| Gulfosinate (2.0) | 0.0b | 15.0cd | 94.3a | 98.0a | 99.1a | 97.1a |
| Pelargonic Acid (3.2) | 6.7b | 20.0c | 40.0c | 22.2d | 20.0d | 20.0c |
| Pelargonic Acid (6.4) | 40.0a | 50.0b | 73.3b | 66.7c | 40.0c | 23.2c |
| Glufosinate (0.5) + Pelargonic Acid (3.2) | 0.0b | 20.0c | 92.7a | 93.3ab | 85.2b | 85.9b |
| Glufosinate (1.0) + Pelargonic Acid (3.2) | 6.7b | 30.0c | 88.3a | 96.0ab | 97.1a | 97.1a |
| Glufosinate (1.0) + Pelargonic Acid (6.4) | 60.0a | 80.0a | 91.0a | 97.1ab | 98.0a | 97.1a |

In sum, the combination of glufosinate and pelargonic acid provided sustained, excellent control of the weeds evaluated. Weed efficacy was observed from two days and continued for over 30 days after treatment. The combination provided statistically significantly better efficacy than each of the products alone at the equivalent dose rates.

## Claims

1. An herbicidal composition comprising:
at least one glutamine synthetase inhibitor; and
at least one herbicidal fatty acid or carboxylic acid compound of formula (I)
CH₃-(CH₂)ₙ-C=O(OH) formula (I)
wherein n is an integer between 6 and 8.

2. The herbicidal composition of claim 1, wherein the at least one glutamine synthetase inhibitor is glufosinate.

3. The herbicidal composition according to claims 1 or 2, wherein the at least one herbicidal fatty acid or carboxylic acid compound of formula (I) is pelargonic acid.

4. The herbicidal composition of any preceding claim, further comprising at least one additional herbicide; and optionally
wherein the additional herbicide is an acetolactate synthase (ALS) inhibitor; and optionally
wherein the acetolactate synthase (ALS) inhibitor is imazethapyr.

5. The herbicidal composition of any preceding claim, wherein the at least one glutamine synthetase inhibitor is glufosinate and the at least one herbicidal fatty acid or carboxylic acid compound of formula (I) is pelargonic acid; and optionally further comprising imazethapyr.

6. The herbicidal composition of any preceding claim, formulated as a ready-to-use (RTU) formulation, emulsifiable concentrate (EC), microemulsifiable concentrate, oil dispersion (OD), powder, water dispersible granule (WG), or water soluble granule (SG).

7. A method for burndown treatment of undesirable vegetation comprising:
applying the herbicidal composition of claim 1 onto or around:
iii) a locus where desirable will be planted or emerge; or
iv) a locus where undesirable vegetation is present or is expected to be present.

8. The method of claim 7, wherein the undesirable vegetation is tolerant or resistant to one or more herbicides.

9. A method of controlling growth of undesirable vegetation comprising:
applying the herbicidal composition of claim 1 onto or around:
iii) a locus where desirable vegetation will be planted or emerge; or
iv) a locus where undesirable vegetation is present or is expected to be present.

10. The method of claim 9, wherein the undesirable vegetation is tolerant or resistant to one or more herbicides.

11. A tank mix herbicidal composition comprising:
the herbicidal composition according to any one of claims 1 to 6; and
water, spray oil, or a combination of water and spray oil.

12. An herbicidal composition comprising:
about 10% v/v to about 20% v/v of at least one fatty acid or carboxylic acid compound;
about 5.0% v/v to about 15% v/v of at least one glutamine synthetase inhibitor; and
about 1% v/v to about 5% v/v of at least one acetolactate synthase (ALS) inhibitor.

13. The herbicidal composition of claim 12, wherein the herbicidal composition comprises the herbicidal composition according to any of claims 1 to 6.

14. The herbicidal composition of any of claims 12 and 13, formulated as a ready-to-use (RTU) formulation, emulsifiable concentrate (EC), microemulsifiable concentrate, oil dispersion (OD), powder, water dispersible granule (WG), or water soluble granule (SG).

15. The herbicidal composition of any of claims 12 to 14, formulated as a ready-to-use (RTU) formulation comprising:
about 0.75% v/v of at least one fatty acid or carboxylic acid compound per gallon of formulation;
about 0.5% of at least one glutamine synthetase inhibitor per gallon of formulation; and
about 0.15% v/v of at least one acetolactate synthase (ALS) inhibitor per gallon of formulation.
